# EUROPEAN PATENT APPLICATION

(11) **EP 4 470 756 A1**
(43) Date of publication of application: **04.12.2024**
(21) Application number: 24179366.0
(22) Date of filing: 31.05.2024
(51) Int. Cl.: B29C 64/336, B33Y 70/10, B29C 64/118, B33Y 10/00, B33Y 80/00

(54) **NON-PLANAR TOOLPATHS FOR MATERIAL EXTRUSION HAVING CROSSING TOOLPATHS**

(30) Priority: 31.05.2023 US 202318326500
(71) Applicant: RTX Corporation, Farmington, CT 06032 (US)
(72) Inventor: GARDELL, Benjamin G., Farmington, 06032 (US); LaFAVOR, Michael Raymond, Farmington, 06032 (US)
(74) Representative: Dehns

(57) **Abstract**

A method of forming a component (200) by material extrusion includes the steps of forming a plurality of first filaments extending along at least a first axis of a three dimensional space and forming a plurality of second filaments crossing the plurality of first filaments by extending in a direction with at least a component along second and third axes in the three dimensional space.

## Description

### BACKGROUND OF THE INVENTION

This application relates to an improved method of forming a non-planar component utilizing material extrusion.

Any number of additive manufacturing techniques are being utilized. One such technique is material extrusion.

In a material extrusion process, layers of a material are placed down upon each other to form the component structure. In general, a nozzle deposits layers in a planar manner relative to others of the layers.

However, it may be desirable to form a component to have a non-planar outer surface. In the prior art, such a component was formed by utilizing a plurality of planar layers having distinct widths, such that there are steps between adjacent ones of layers.

Then, a non-planar layer is deposited in a relatively great thickness relative to the planar layers to cover the steps.

### SUMMARY OF THE INVENTION

In a featured embodiment, a method of forming a component by material extrusion includes the steps of forming a plurality of first filaments extending along at least a first axis of a three dimensional space and forming a plurality of second filaments crossing the plurality of first filaments by extending in a direction with at least a component along second and third axes in the three dimensional space.

In another embodiment according to the previous embodiment, some of the plurality of first filaments and the plurality of second filaments are formed of a primary material with a second infill material.

In another embodiment according to any of the previous embodiments, the infill material is delivered through a valve and a control is programmed to control the valve to deliver or block infill material.

In another embodiment according to any of the previous embodiments, the infill material includes chopped fibers.

In another embodiment according to any of the previous embodiments, the chopped fibers includes synthetic fibers.

In another embodiment according to any of the previous embodiments, the infill material includes a continuous fiber.

In another embodiment according to any of the previous embodiments, the infill material includes beads.

In another embodiment according to any of the previous embodiments, the beads include glass beads.

In another embodiment according to any of the previous embodiments, the infill material is selectively deposited into some of the plurality of first and second filaments and not deposited into other of the plurality of first and second filaments.

In another embodiment according to any of the previous embodiments, at least some of the plurality of first and second filaments are formed only of the primary material.

In another embodiment according to any of the previous embodiments, the at least some of the first filaments are formed in a plurality of stacked layer portions, and have at least one axial end adjacent one of the second filaments.

In another embodiment according to any of the previous embodiments, one group of the second filaments extends along a direction with the component along the second axis, and a component along the third axis, and another group of the second filaments extending in a direction with a component in an opposed direction along at least one of the second and third axis, such that the groups cross each other.

In another embodiment according to any of the previous embodiments, at least some of the second filaments are curved along all three of the axes.

In another embodiment according to any of the previous embodiments, the component is an acoustic treatment for use in a gas turbine engine.

In another embodiment according to any of the previous embodiments, the component is an acoustic treatment for use in a gas turbine engine.

In another embodiment according to any of the previous embodiments, at least some of the first filaments are formed in a plurality of stacked layer portions, and have at least one axial end adjacent one of the second filaments.

In another embodiment according to any of the previous embodiments, there is one group of the second filaments extends along a direction with the component along the second axis, and a component along the third axis, and another group of the second filament extending in a direction with a component in an opposed direction along at least one of the second and third axis such that the groups cross each other.

In another embodiment according to any of the previous embodiments, at least some of the second filaments are curved along all three of the axes.

In another embodiment according to any of the previous embodiments, the forming steps including depositing material in a heated environment.

In another embodiment according to any of the previous embodiments, the component is an acoustic treatment for use in a gas turbine engine.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a feature utilized in engines.
Figure 2B shows the structure of an acoustic treatment as utilized in the Figure 2A surface.
Figure 3A shows a liner with a perforated sheath made according to the teachings of this disclosure.
Figure 3B shows a detail of the Figure 3A liner.
Figure 3C shows an alternative embodiment liner.
Figure 3D shows yet another alternative embodiment liner.
Figure 3E shows a method of forming another alternative embodiment.
Figure 3F shows a detail of the Figure 3E embodiment.
Figure 3G shows an optional method.
Figure 4A shows a feature that could be incorporated into a liner such as the Figure 3 liner.
Figure 4B shows another embodiment.
Figure 5A shows a step in forming a liner with the feature of Figures 4A or B.
Figure 5B shows a system for forming the Figures 4A or B liner.
Figure 6A shows a challenge in forming surfaces with prior art material extrusion processes.
Figure 6B shows a second prior art material extrusion process.
Figure 7A shows modifications of the formation of products utilizing further teachings of this disclosure.
Figure 7B shows a feature of the Figure 7A embodiment.
Figure 7C shows a further non-planar modification.
Figure 8 is a flow chart of methods disclosed here.

### DETAILED DESCRIPTION

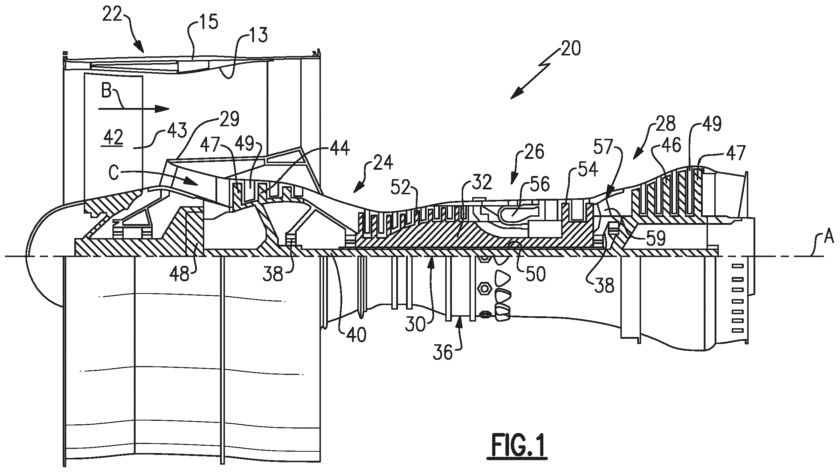

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (102 cm), or more narrowly no more than 75 inches (191 cm). For example, the maximum radius of the fan blades 43 can be between 45 inches (114 cm) and 60 inches (152 cm), such as between 50 inches (127 cm) and 55 inches (140 cm). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5} (where °R = K x 9/5). The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30°C). The TET may be greater than or equal to 2700.0 °F (1482.2°C), or more narrowly less than or equal to 3500.0 °F (1926.7°C), such as between 2750.0 °F (1510.0°C) and 3350.0 °F (1843.3°C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8°C), or more narrowly greater than or equal to 800.0 °F (426.7°C), such as between 900.0 °F (482.2°C) and 975.0 °F (523.9°C). The relatively low EGT can be utilized in combination with the other techniques disclosed herein to reduce fuel consumption.

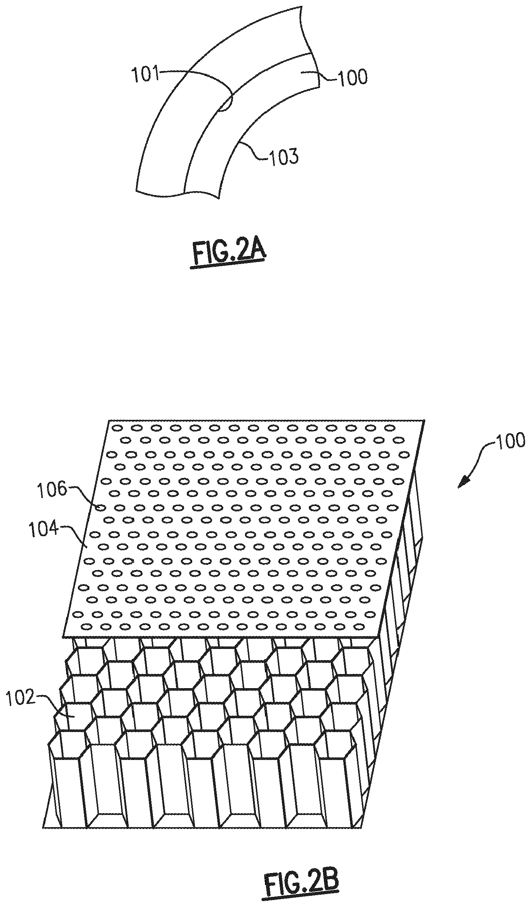

Figure 2A shows an acoustic treatment 100 which is utilized in engines at an interior surface 101 such as a fan case within housing 15 as shown in Figure 1.

As shown in Figure 2B, the acoustic treatment 100 includes a layer of cells 102 which extend for a greater radial distance than the thickness of a covering sheath 104. The covering sheath 104 has a plurality of perforations 106 which communicate air from an inner peripheral surface 103 of the acoustic treatment 100 into the cells 102. The acoustic treatment is designed to reduce or eliminate noise that may otherwise emanate from the engine. The liner of Figure 2B does not fully illustrate the disclosed concept as the perforations 106 would not be cylindrical, but would tend to have linear edges as described below. However, it does show an acoustic treatment 100 having an integral perforated sheath 104 and a cellular body having open cells 102. In Figure 2B those cells are shown to be honeycomb as an exemplary embodiment.

This disclosure describes forming the cells 102 and sheath 104 using additive manufacturing techniques such as material extrusion to create a monolithic structure for ease of manufacturing with advantages such as preferred placement of the perforations in the sheath in relation to the cell walls, to reduced crosstalk between the cells, reduce drag, and provide localized functionality.

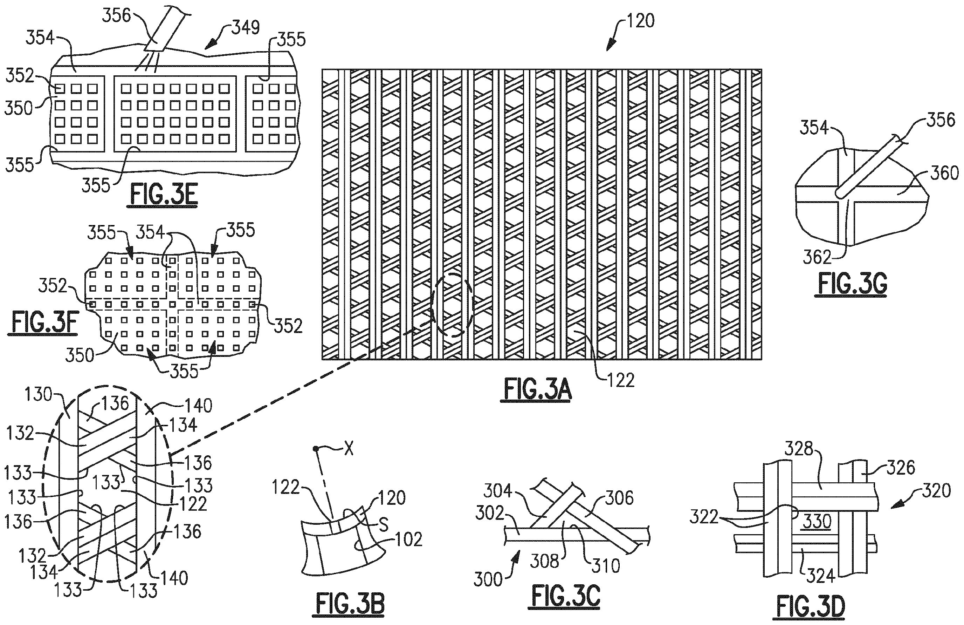

Figure 3A shows a liner 120 which has a plurality of perforations 122. Rather than forming the perforations themselves by depositing material around the desired location and forming a cylindrical perforation, this disclosure utilizes a plurality of filaments 132, 134, and 136 deposited in an overlaying pattern to create the perforations thereby controlling the size and shape of the perforations to achieve a desired percentage of open area. Additional filaments may also be utilized. As shown, filaments 130 and 140 extend parallel to each other, as do filaments 132 and 134. As the layers of filaments are laid across and/or atop another layer, what is left is the perforation 122. As can be seen, the perforation 122 does not have a cylindrical cross-section, but rather has a plurality of linear edges 133. As can be appreciated, additional filaments can cross in a different direction to make the perforation 122 of any desired shape and size. Moreover, the more filaments that are utilized, the more linear edges the perforation 122 will have, approaching a cylindrical shape. Still, a cylindrical shape will never be reached with the disclosed liner 120. As the size of the perforations 122 decrease in size to be micro-perforations of less than 10 thousandths of an inch (0.25 mm), smaller perforations decrease drag in the component.

The multidirectional filaments allows fine control over a design point of such sheaths. Namely, there is a desired percentage of perforation per area of liner which has sometimes been difficult to achieve with additive manufacturing. With the liner of Figure 3A, it is easier to achieve any desired perforation percentage.

As shown in Figure 3B, the liner 120 has inner surfaces curved about a central axis X, and the perforations 106 extend through the liner 120 in a radial direction relative to the central axis. Axis X may be the rotational axis of an associated engine.

Figure 3C shows another liner embodiment 300. Here filaments 302, 304 and 306 cross to define internal triangular shaped perforations 308. Again, the perforations 308 are defined by linear edges 310.

Figure 3D shows yet another embodiment 320. Here there are crossing filaments 322, 324, 326 and 328. Each of these filaments are shown as a double layer. They together define a rectangular shaped perforation 330 having a slot shape with linear edges 332.

The disclosed liner and method of this application forms the cells and perforated sheath as a one-piece component utilizing additive manufacturing, and in particular material extrusion, utilizing one or more types of filament materials.

Figure 3E shows a method of forming a component such as the component 100, or a component 349. Component 349 has a perforated sheath 350 and open cells 355. Here, the open cells 355 are rectangular. The perforations 352 are shown covering the open cells 355. The open cells 355 are formed by a plurality of walls 354, and an additive manufacturing tool, and in particular a material extrusion tool 356, is shown laying down materials to form the walls 354 of cells 355. In a preferred method, the sheath 350 is initially formed with the perforations 352, and then cell walls 354 are formed on the sheath.

As shown in Figure 3F, the perforations 352 may be formed above the walls 354, but that is not necessary, and would only be done as a manufacturing convenience. However, one can appreciate a width of the walls 354 is greater than a width of the perforation 352. It is not advantageous to have a perforation 352 extending across two adjacent open cell areas 355. Preventing the sheath perforations from contacting the cell walls 354 reduces or eliminates the cross talk between the cells 355 to improve the effectiveness of the liner 349.

Figure 3G shows another feature wherein crossing filaments 354 and 360 are used in forming a monolayer of the same or different filaments. A filament 354 is initially deposited and an additive manufacturing tool 356 is shown depositing a crossing filament 360 of the same or a different material. The initial deposit of at least two of filaments 354 defines a primary width of the perforation. The tool path utilized by the additive manufacturing tool, or nozzle 356, would deposit the subsequent filaments 360 in the same plane as the filament 354 to define the length or other edges of the perforation. Thus, at an intersection 362, the previously described linear edges may bulge out slightly because the nozzle depositing the subsequent filament pushes through the first filament material 354 while remaining in the same print layer. The size of the perforations can be created to less than 10 mils (0.25 mm), preferably less than 5 mils (0.13 mm), due to the ability to deposit the filaments as close together as possible in the same plane. The filament thickness, as dictated by the nozzle orifice size, allows the ability to create micro-perforations in the sheath defined by at least the width created by the distance between the filaments 354 and the length created by the distance between the filaments 356. This technique will result in a thinner final component which may be desirable, particularly for use in an acoustic liner.

In yet embodiment, the liner can be tailored to have a heterogeneous pattern of perforations to accommodate varying air flow direction and acoustic performance requirements within the same component.

In a preferred embodiment, the acoustic treatments are formed from a thermoplastic, and more narrowly a polycarbonate. One possible material is available under the trademark ULTEM^{®} and commercially available from a number of different manufacturers and distributors.

Details and claims this liner are disclosed in a co-pending United States Patent Application entitled "ACOUSTIC TREATMENT MADE BY ADDITIVE MANUFACTURING" filed on even date herewith, and by the Applicant of this application, and now identified as Serial No. 18/326489.

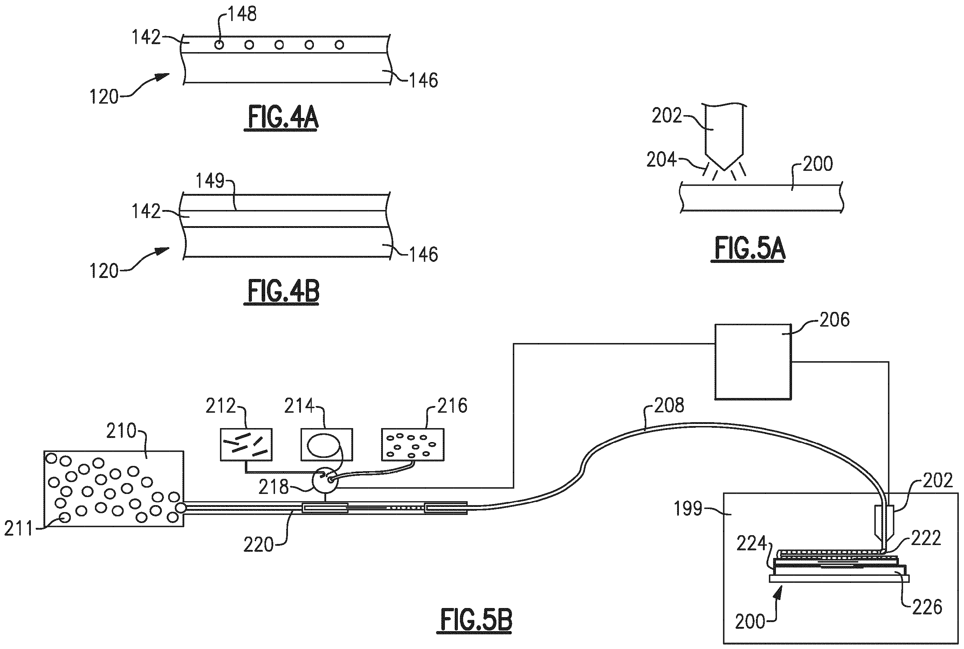

Figure 4A shows another feature which can be optionally incorporated into the Figure 3A liner. In Figure 4A, the liner 120 has radial inner area 142 and radial outer area 146. As shown in this embodiment, there are chopped fibers 148, which may be formed of a strength adding synthetic fiber such as an aramid fiber sold under the tradename KEVLAR^{®} and commercially available from a number of different manufacturers and distributors. It is known that the radial inner surface of an acoustic liner is subject to impacts such as bird strikes, etc. Incorporating such strengthening fibers increases the durability of the acoustic liner. Figure 4B shows yet another feature comprising a layer 142 having a continuous fiber 149 is deposited therein, which can be an electrical or signaling member. The features illustrated in Figures 4A and 4B may be used for forming any number of other components. Distinct radial areas can be defined within a radial thickness of the liner, and the material of the liner (or other component) may include different characteristics or functionality in different areas.

Figure 5A shows a formation of an intermediate part 200. A nozzle 202 is shown depositing material 204 onto underlying intermediate layers. Part 200 may become a liner such as the liners of Figure 3A, or Figures 4A and 4B, or any other part. The method of Figure 5A may use material extrusion, and other than as disclosed in the following paragraphs, known material extrusion techniques may be utilized.

As shown in Figure 5B, a system 208 is forming intermediate part 200, which may be an acoustic liner as disclosed above, but could be any number of other components. A nozzle 202 is shown depositing material, such as a filament, and a control 206 controls the nozzle 202, and a feed assembly.

The controller 206 is programmed to operate the methods described herein. The feed assembly includes a hopper 210 receiving beaded media 211, which may be consist of the material that will form the majority of the component 200. An extruder 220 receives and melts the beaded media 211. The extruder 220 also communicates with a plurality of optional infill materials 212, 214 and 216. The extruder 220 will include a screw-like member to mix the infill materials as they pass towards nozzle 202.

As shown in Figure 5B, the material deposition occurs in a furnace 199. As an example, the furnace may be heated to a temperature of about 300°C or at a working temperature wherein the entire deposition is completed or close to completed before any, or a significant portion, of the component fully solidifies.

A valve 218 can be activated by the controller 206 to selectively deliver one, none, or a plurality of the infill materials. The infill materials are illustrated as chopped fibers 212, a continuous fiber 214 or beaded or particulate matter 216. As shown, the component 200 has areas 222, 224 and 226, which may comprise filaments. Incorporating infill materials may be utilized to form a component such as the parts of Figure 4A or 4B which have different infill materials in different areas. The area 222 may receive glass beads, whereas the area 224 may receive chopped fibers, and the area 226 may not receive any infill material. The continuous fiber may be utilized for any number of purposes including depositing electrical or signaling devices within the component to be formed.

By using materials and/or incorporating different infill materials, the acoustic liner may have customized areas of differing coefficients of thermal expansion, varying degrees of durability and or specific mechanical properties in a single monolithic structure. As another example, if one wanted to provide a sacrificial area to the overall component, the mechanical properties could be reduced locally.

Details and claims of this method are disclosed in a co-pending United States Patent Application entitled "MATERIAL EXTRUSION WITH SELECTIVELY ADDED INFILL MATERIAL" filed on even date herewith, and by the Applicant of this application, and now identified as Serial No. 18/326513.

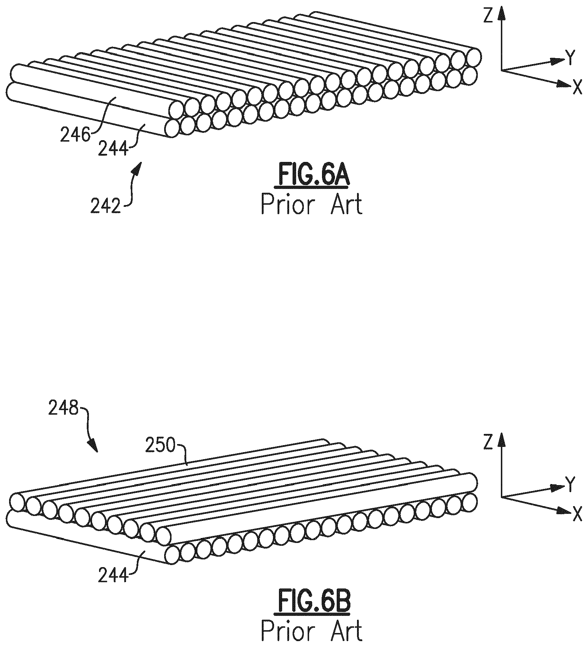

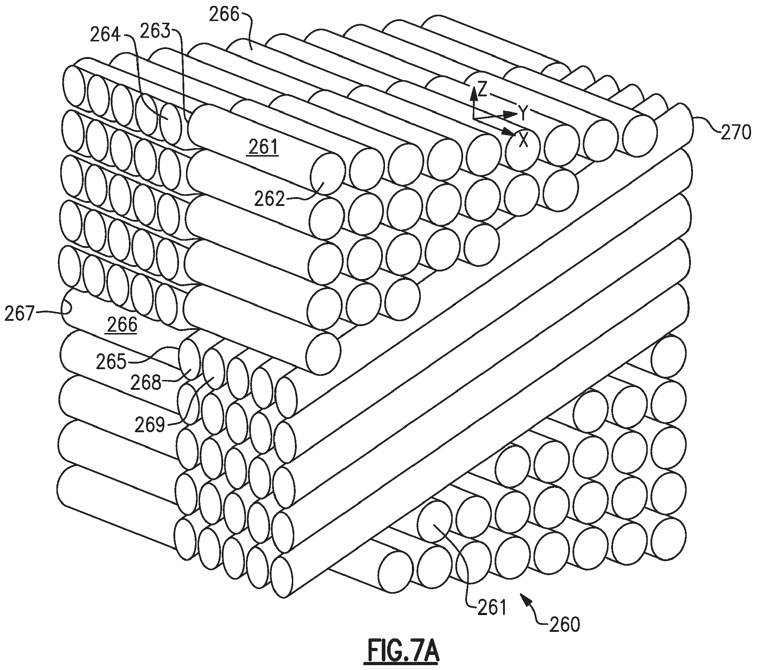

In yet another embodiment, a structure shown in Figure 7A can be made using the system and method described herein having increased strength along multiple axes. A prior art structure shown in Figure 6A shows a first material 242 which may be formed utilizing prior art material extrusion processes. Here there are layers 244 and 246 laid down in a single direction along an axis X. Such an arrangement provides good strength along the X axis, but undesirably low strength along the Y and Z axes, as there are interlayer planes that provide weak spots. Similarly, a prior structure as shown in Figure 6B shows a distinct material 248 having layers 244 extending along the X axis with layers 250 extending along the Y axis. While such an arrangement would increase the strength in the Y axis and maintaining good strength characteristics along the X axis there would still be weakness in the Z axis.

Figure 7A illustrates a cell structure arrangement 260 which provides good strength along each of the x, y and z axes achieved by the non-planar method of material extrusion discussed above. Layer portions 261 extend along the X axis between ends 262 and 263. Similarly, there are other layer portions 266 extending between ends 265 and 267. Crossing layers 264 extend in a direction with a component in both the Z and Y direction. The layers 264 end up outward of an end of portions 266, and also adjacent the axial end 263 of the layer portions 261. In this embodiment, the layer portions 264 extend with a component in a downward direction and to the left (in the negative Z axis and the Y axis). Then, other crossing layers 268 extend from end 269 to an end 270. As can be seen, the layers extend in the Y axis but in the positive Z axis. The interfitting of the layers in this manner, with layer portions 261 and 266 generally extending along a first dimension and other crossing layers extending in a direction having at least a component in the other two of the three dimensional axes.

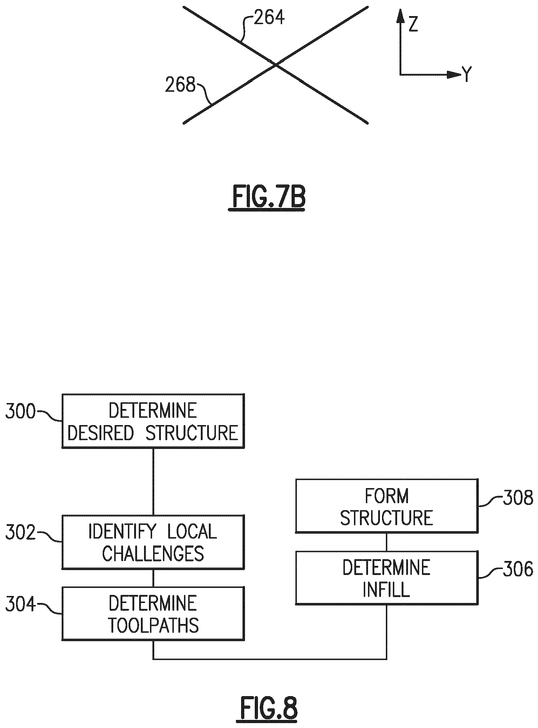

As shown in Figure 7B, the layer portions 268 extend in a direction with a positive component along the Z axis whereas the layer portions 264 extend along a direction with the component in the opposed direction along the Z axis such that there are crossing layers that cross each other, although spaced by intermediate planar portions 261 and 266.

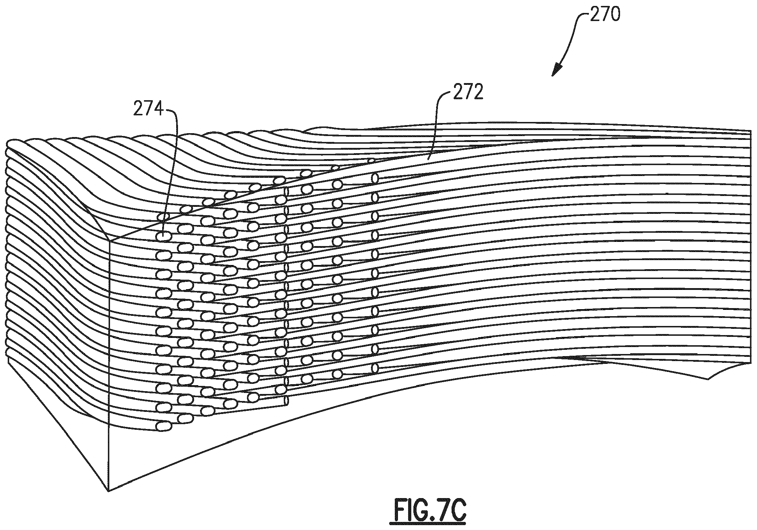

Figure 7C shows a curved component 270 wherein there are filaments 272 curving among two or even three axes to form a final curved outer surface. Crossing members 274 may also curve along all three axes.

Figure 8 shows a flow chart for the methods of this disclosure. At step 300 a desired structure is determined. At step 302 any local challenges within the structure are identified. This might include areas which are subject to impact such as the inner periphery of a liner, or other areas having local challenges such as relatively high stress compared to adjacent areas. At step 304 toolpaths are determined, such as disclosed above. At step 306, a determination is made as to whether infill of a secondary material into a primary material is indicated. At step 308 the structure is formed, and may include the depositing of crossing filaments such as described with regard to Figure 7A.

A method of forming a component by material extrusion under this disclosure could include the steps of forming a plurality of first filaments extending along at least a first axis of a three dimensional space and forming a plurality of second filaments crossing the plurality of first filaments by extending in a direction with at least a component along second and third axes in the three dimensional space.

Although embodiments of an apparatus and method have been disclosed, a worker of skill in this art would recognize that modifications would come within the scope of this disclosure. For that reason, the following claims should be studied to determine the true scope and content of this disclosure.

## Claims

1. A method of forming a component (200) by material extrusion comprising the steps of:
forming a plurality of first filaments extending along at least a first axis of a three dimensional space; and
forming a plurality of second filaments crossing the plurality of first filaments by extending in a direction with at least a component along second and third axes in the three dimensional space.

2. The method as set forth in claim 1, wherein some of the plurality of first filaments and the plurality of second filaments are formed of a primary material (211) with a second infill material (212, 214, 216).

3. The method as set forth in claim 2, wherein the infill material (212, 214, 216) is delivered through a valve (218) and a control (206) is programmed to control the valve (218) to deliver or block infill material (212, 214, 216).

4. The method as set forth in claim 2 or 3, wherein the infill material includes chopped fibers (212).

5. The method as set forth in claim 4, wherein the chopped fibers (212) includes synthetic fibers.

6. The method as set forth in any of claims 2 to 5, wherein the infill material includes a continuous fiber (214).

7. The method as set forth in any of claims 2 to 6, wherein the infill material includes beads (216).

8. The method as set forth in claim 7, wherein the beads (216) include glass beads.

9. The method as set forth in any of claims 2 to 8, wherein the infill material (212, 214, 216) is selectively deposited into some of the plurality of first and second filaments and not deposited into other of the plurality of first and second filaments.

10. The method as set forth in claim 9, wherein at least some of the plurality of first and second filaments are formed only of the primary material.

11. The method as set forth in any preceding claim, wherein at least some of the first filaments are formed in a plurality of stacked layer portions (261, 266), and having at least one axial end (263, 265) adjacent one of the second filaments.

12. The method as set forth in any preceding claim, wherein there is one group of the second filaments extends along a direction with the component along the second axis, and a component along the third axis, and another group of the second filament extending in a direction with a component in an opposed direction along at least one of the second and third axis such that the groups cross each other.

13. The method as set forth in any preceding claim, wherein at least some of the second filaments are curved along all three of said axes.

14. The method as set forth in any preceding claim, wherein the forming steps including depositing material in a heated environment.

15. The method as set forth in any preceding claim, wherein the component (200) is an acoustic treatment (100) for use in a gas turbine engine (20).
